(19) **Europäisches Patentamt**

**European Patent Office**

**Office européen des brevets**

(11) Publication number: **0 171 253**
**A2**

## (12) EUROPEAN PATENT APPLICATION

(21) Application number: **85305414.6**

(22) Date of filing: **30.07.85**

(51) Int. Cl.⁴: **C 04 B 35/66, C 04 B 35/10**

(30) Priority: **06.08.84 US 637941**

(43) Date of publication of application: **12.02.86**
**Bulletin 86/7**

(84) Designated Contracting States: **DE FR GB**

(71) Applicant: **NORTON COMPANY, 1 New Bond Street, Worcester Massachusetts 01606 (US)**

(72) Inventor: **Jones, Cecil Moore, 72 Chester Street, Worcester Massachusetts (US)**

(74) Representative: **Baillie, Iain Cameron et al, c/o Ladas & Parry Isartorplatz 5, D-8000 München 2 (DE)**

(54) **Refractory cement.**

(57) A raw batch is shown for use as a dry vibration or ramming cement particularly for use in blast furnace operations and particularly for use in runners and troughs for conveying molten iron and slag. The cement mix includes an ingredient that provides a high alumina content that becomes a sintered liner body in use, together with a lower temperature fusing bond to hold the cement in place until it is sintered in situ.

## REFRACTORY CEMENT

CECIL M. JONES
72 Chester Street
Worcester, Massachusetts   01605

TECHNICAL DISCLOSURE

This invention relates to a dry packing or ramming cement for making monolithic refractory liners for the blast furnaces, runners, troughs and the like.

BACKGROUND AND INFORMATION DISCLOSURE STATEMENT

The following are representative of the most relevant prior art known to the Applicant at the time of filing of this application.

United States Patents

| | | |
|---|---|---|
| 1,081,536 | Jeppson | December 16, 1913 |
| 2,537,218 | Giles | January 9, 1951 |
| 3,261,699 | Henry | July 19, 1966 |
| 3,282,579 | Miller, Jr. | November 1, 1966 |
| 4,060,424 | Hofmann | November 29, 1977 |
| 4,244,745 | Havranek et al | January 13, 1981 |

The conventional ramming or dry vibrated cement mixtures and castable cements used particularly in troughs and runners for blast furnaces, contain silicon carbide and/or some form of carbon or graphite.  It is believed important to include these additives to the cement mix to reduce erosion caused by the flowing slag and molten pig iron.  It has been noted, however, that when 15% by weight of silicon carbide is present an appreciable amount of erosion takes place at the slag notch and to a lesser extent where the iron  flows over the refractory trough.  When a coarser ground silicon carbide is used relatively severe erosion results at the iron slag interface as the iron flow continues, the carbide from the cement disappears leaving a porous refractory residue.  If a finer grained silicon carbide is used, less erosion is observed but although smaller pores are present, even the fine grained silicon carbide is removed by the slag-iron flow. Carbon and graphite that are present at the slag notch portion of the liner likewise are removed as the tappings from the blast furnace flow through the conventional carbon containing refractory lined trough to produce an undesired porosity in the refractory liner.

It is believed that this erosion at the slag-iron interface results from an oxidation process when the CaO in the slag flow reacts with the sulfur in the iron flow to produce CaS and $O_2$. This oxygen reacts with the SiC and/or C present in the conventional cements used for trough and runner liners to produce $SiO_2$ and $CO_2$. The erosion below the iron line is probably due to the solubility of silicon carbide in iron and steel.

In the cement of the present invention, the silicon carbide or carbon additives heretofore deemed essential, have been eliminated. The invention cement is a refractory grain mixture having a high alumina content that is mixed with a small amount of a ceramic material that bonds the alumina mixture at a lower temperature and holds it in place until it is sintered in situ.

Cements have been used for many refractory purposes in the past as exemplified by the patents listed above:

U.S. Patent No. 1,081,536 to Jeppson, December 16, 1913 shows a chemically inert cement for supporting brick liners in furnaces. This disclosure provides a special purpose hydraulic cement that does not react with alumina bricks when exposed to high temperatures. The mixture suggested for this purpose includes grains of an alumina containing compound mixed with a lime or magnesia bond. The mix is stirred with water and placed as ordinary mortar for setting refractory bricks. It is not suggested for use as a liner for troughs or runners.

U.S. Patent No. 2,537,218 to Giles, January 9, 1951 discloses a calcium aluminate bond for a refractory material wherein at least 1% of hydrogen fluoride by weight is present in the mix that is especially useful in the form of bricks or slabs for muffles and furnaces. The firing of the bricks in the presence of the hydrogen fluoride and calcium aluminate is said to produce a brick having, increased hot and cold strength load bearing qualities and abrasion resistance.

U.S. Patent No. 3,261,699 to Henry, July 19, 1966 is another disclosure of a refractory liner material for an electrolytic cell for producing aluminum wherein alumina powder and an alkali metal fluoride are blended together, calcined, pressed into shape and fired at 850°C to 1000°C. The resulting bricks are useful for lining the bottom and sides of such cells. This invention is concerned with ball milling and calcining the mixture prior to pressing the mix to brick form for subsequent firing to produce a brick of improved density. The manipulative sequence of steps is alleged to provide a novel form of brick for electrolytic aluminum reduction cells.

U.S. Patent No. 3,282,579 to Miller Jr., November 1, 1966 describes a lining for metallurgical vessels or kilns including the molding of solid shapes and the formulation for a facing to cover a backup portion. The solid shapes forming the backup portion are made from a mix containing alumina and a plasticizer for example, calcined bauxite and high purity alumina constitute about 85% by weight of the mix from which the backup shapes are molded together with 15% by weight of a ball clay plasticizer. The facing over the backup is fabricated by mixing up to 10% by weight pure volatilized silica with an alumina containing component selected from the group consisting of alumina, calcined alumina, synthetic aluminous grain such as fused mullite and mixture thereof to produce a mix containing at least 50% alumina. The mix for the facing is designed to produce a fine submicron crystalline mullite matrix.

U.S. Patent No. 4,060,424 to Hofmann, November 29, 1977 discloses a ramming cement made of a mixture of refractory grain selected from a group consisting of aluminum oxide, magnesium oxide, silicon carbide, mullite, spinel and mixtures thereof together with a glass frit. The frit serves as a temporary low temperature bond for supporting the refractory grain through a range of temperatures up to the temperature at which convention ceramic bonding takes place. This known cement is suggested for use in steel making furnaces and the like and suggests the addition of silicon carbide as an ingredient that may be included as is typical in conventional blast furnace liners.

U.S. Patent No. 4,244,745 to Havranek et al, January 13, 1981 shows how to combine a refractory filler selected from the group composed of chamotte, calcined or molted alumina, calcined bauxite, mullite diaspore, spinel, chromium ore, magnesium oxide and silicon carbide. The hydraulically activated cement for such grain is a calcium aluminate together with reactive alumina. The water to activate the cement is added in a silica sol. The filler constitutes 80-90 parts by weight together with 5-15 parts by weight of reactive alumina to make up a total of 100 parts to which a 40% by weight of silica sol is added in sufficient amount to add 3.5-5% by weight of water to the total mixture. This mix may then be cast in a mold to produce a monolithic refractory shape that may be used for lining furnaces. The invention is concerned with reducing the quantity of water required to set up the cement to minimize porosity while producing a strong refractory shape.

As contrasted with all of the above noted patents, the present invention provides an improved cement adapted for use in troughs and runners used in the casting of iron and steel and more specifically provides a cement having no silicon carbide or graphite or carbon therein. The use of a cement such as that of the present invention precludes the development of any porosity that would otherwise appear in these conduits for the molten metal and slag flowing from the production furnaces if a conventional silicon carbide or carbon containing cement had been used instead.

DISCLOSURE OF THE INVENTION

This invention provides a cement for use particularly in troughs and runners used for conveying molten iron and slag from blast furnaces. Such a cement is a mixture of dry granular refractory material adapted to be rammed or vibrated or wetted and cast in place. After the cement has been packed in place, it is fired in place and the cement becomes permanently set all as is well known in the art.

The particular novelty of this cement is the composition of the mixture made with a high alumina content together with the exclusion of silicon carbide or carbon or graphite to produce trough and runner lining for carrying iron and slag from a blast furnace. The liner of this invention is more durable and has a longer life in this usage, without suffering from the erosion and porosity encountered when any of the conventional cements containing silicon carbide, carbon and graphite are used.

It is a mixture that contains a predominant amount of alumina containing refractory grains. The alumina may be white fused and crushed grain, tabular alumina, calcined alumina, refined bauxite that produces a dark fused grain when crushed or any such grain that has more than 90% and preferably has more than 95% by weight of alumina present. This high alumina grain is crushed if necessary and screened to pass through a stack of U.S. Standard screens having one half inch mesh screens and finer. Graded grains are selected in a range of sizes to produce as substantially a solid compacted mass as is possible with normal ramming or casting procedures.

The refractory grains that provide the high alumina component of the mix are present in a range of from 90% to 99% by weight but preferably 95% of the weight of the completed mix.

To the alumina containing grains are added a ceramic glassy frit type bond selected from a group or mixture of relatively lower melting ingredients that includes calcium aluminate, silica, cryolite, silicon metal, boric

acid, kyanite, mullite, $KBF_4$ and phosphates such as monoaluminum phosphate, monosodium fluorophosphate, and calgon The mix may also include a few percent of an organic polymer c alginate thickening agent. This lower melting bond ingredient may be added in an amount of from 1% to up to 10% by weight of the completed mix and preferably an addition of 5% by weight c a mixture is used.

UNDERLINE: EXAMPLE OF THE PREFERRED EMBODIMENT

A preferred castable composition is as follows:

| Ingredient | Size | Wt. % |
|---|---|---|
| dark fused alumina | 1/2" and finer | 75 |
| tabular alumina | 325F | 10 |
| calcined alumina | 325F | 10 |
| $SiO_2$ | 325F | 2 |
| calcium aluminate | | 2 |
| cryolite | | 1 |

A test run was made with a runner lined with the above preferred cement in comparison with two runners lined with the same mix to which a 15% of a coarse silicon carbide and a fine silicon carbide had been added. The results were a follows:

| Erosion in mm/1000 Tons of Molton Iron | Preferred Mix | Mix With 15% Silicon Carbide | |
|---|---|---|---|
| | | Coarse SiC | Fine Sic |
| at slag notch | 1.2 | 2.3 | 1.7 |
| iron | 0.2 | 2.0 | 1.0 |

The carbon content of the iron used in the foregoing tests was reduced from 4.02% to 1.28%.

Additional tests were carried out with carbon added to the iron so that the carbon content remained above 4% for the entire test procedures. The results were as follows:

| Erosion in mm/1000 Tons of Molten Iron | Preferred Mix No SiC or C | Mixes with 21% SiC | |
|---|---|---|---|
| | | Coarse | Fine |
| at slag notch iron- | 0.8 | 1.8 | 1.2 |
| castable mix | 0.6 | 1.4 | 1.2 |
| at slag notch iron- | 1.4 | 1.6 | |
| dry vibrated mix | 0.2 | 0.9 | |

CLAIMS:

1. A raw batch for a cement for use in troughs and runners used for molten iron and slag flowing from a blast furnace consisting of a mixture of refractory grains having at least 90% by weight alumina present therein together with a lower temperature fusing bond said mixture being designed to have more than 90% by weight of the alumina containing grains present, said grains being selected from the group consisting of white fused alumina, tabular alumina, dark fused alumina, fused bauxite and mixtures thereof, said grains ranging in sizes passing through a 1/2" screen down to 20F, together with said lower temperature fusing bond present in an amount of up to 10% by weight selected from the group consisting of calcium aluminate, silica, cryolite, potassium fluoroborate, silicon, boric acid, kyanite, mullite, cryolite, monoaluminum phosphate, monsodium fluorophosphate, sodium hexametalphosphate, and mixtures thereof.

2. A cement as in Claim 1 wherein said refractory grains are present in an amount of 95% by weight and said lower temperature fusing bond is present in an amount of 5% by weight.

3. A cement as in Claim 2 wherein said lower temperature fusing bond includes 2% by weight of calcium aluminate, 2% by weight of silica, and 1% by weight of cryolite.

4. The raw batch of Claim 1 wherein said raw batch includes up to a few percent of an organic polymer.

5. The raw batch of Claim 1 wherein said raw batch includes up to a few percent of an alginate thickening agent.

6. The raw batch of Claim 1 utilized as a dry vibration cement.

7. The raw batch of Claim 1 utilized as a ramming cement.

The results noted on the above test indicate a superior trough liner results from using the herein described cement in a runner as compared with a runner provided with a liner having the conventionally used silicon carbide component. Less erosion was found in the runner in which the invention cement was used. Molten iron tends to dissolve the silicon carbide from the liner in the runners have the silicon carbide in contact with the metal, the coarser grains of SiC are dissolved more readily in the metal leaving large pores wherever the SiC was exposed to the molten flow, the finer grains leave finer pores. At the slag line it is speculated that any CaO in the slag reacts with sulfur in the molten metal to release $O_2$ that then combines with SiC to produce $SiO_2$ and $CO_2$ whereas, in the trough lined with the invention cement with neither of the SiC or carbon additives present in the cement forming the liner for the trough or runner, neither the dissolution process nor the CaO-S reaction can take place so that a longer runner life with less erosion results.

The above description is based on the best mode known at the present time, and is not to be considered limiting. The product of this invention is a raw batch preferably adapted to be fired after being placed in a trough or runner for a blast furnace for running off slag and molten iron although it may as well be used in the walls of the furnace. The ultimate sintered in situ product is more resistant to erosion than any similar product known to me.